# EUROPÄISCHE PATENTSCHRIFT

(11) **EP 0 942 850 B1**
(45) Veröffentlichungstag und Bekanntmachung des Hinweises auf die Patenterteilung: **03.12.2003**
(21) Anmeldenummer: 98954411.9
(22) Anmeldetag: 14.10.1998
(51) Int. Cl.: B60R 21/16

(54) **GASSACK**
AIRBAG
COUSSIN GONFLABLE

(30) Priorität: 15.10.1997 DE 29718305 U; 22.01.1998 DE 29801051 U; 20.08.1998 DE 29814961 U
(43) Veröffentlichungstag der Anmeldung: 22.09.1999
(73) Patentinhaber: TRW Occupant Restraint Systems GmbH & Co. KG, 73551 Alfdorf (DE)
(72) Erfinder: HEIGL, Jürgen, D-73560 Böbingen (DE)
(74) Vertreter: Kitzhofer, Thomas, Dipl.-Ing.
(86) Internationale Anmeldenummer: EP9806505
(87) Internationale Veröffentlichungsnummer: WO99019171

(56) Entgegenhaltungen:
- DE-A- 19 647 679
- DE-U- 29 605 896
- DE-U- 29 709 389
- DE-U- 29 718 305

## Beschreibung

Die Erfindung betrifft einen Gassack, mit mehreren Wandungen aus Gewebematerial, die das Innere des Gassacks begrenzen, wenigstens einem Trennsteg, der durch Verweben von gegenüberliegenden Wandungsbereichen gebildet ist und das Innere des Gassacks in mehrere Kammern unterteilt.

DE 297 09 389 U zeigt einen gattungsgemäßen Gassack.

Insbesondere beim Entfalten des Gassacks wird das Gewebe extrem belastet, wobei die Belastungen im Bereich der Trennstege und der Umfangsränder, wo die Gewebelagen miteinander vernäht oder verwoben sind, besonders hoch werden können. Die Enden der Trennstege sind ebenfalls Stellen, an denen das Gewebematerial hohen Belastungen ausgesetzt ist, da um das Ende herum der Gassack aufgeblasen wird und nur das Ende die Gewebelagen zusammenhält. Es kann in diesem Bereich sehr leicht zum Reißen von Kett- oder Schußfäden, insbesondere aber zu Undichtigkeiten kommen.

Die Erfindung schafft einen Gassack, bei dem im Bereich des freien Endes des Trennstegs die Belastungen auf das Gewebematerial und Undichtigkeiten verringert werden. Dies wird bei einem Gassack der eingangs genannten Art dadurch erreicht, daß der Trennsteg wenigstens ein freies Ende hat, an dem er sich verbreitert und in einer Tropfenform oder einer Rundung ausläuft. Freies Ende heißt in diesem Zusammenhang, daß der Trennsteg nicht etwa in den Umfangsrand der Wandungen übergeht, sondern daß der Trennsteg mit Abstand vor dem Umfangsrand endet. Wie sich herausgestellt hat, wird die Belastung auf das Gewebematerial am freien Ende des Trennstegs bei verwobenen Wandungen durch diese Ausgestaltung deutlich reduziert.

Die Rundung ist vorzugsweise umfangsmäßig geschlossen.

Der Trennsteg verläuft ferner als langgestreckte, lineare, vorzugsweise aber gekrümmte Linie. Gemäß einer weiteren Ausgestaltung erstreckt sich der Trennsteg quer zu den Kettund den Schußfäden des Gewebematerials, damit die Belastung auf beide verteilt und nicht eine der beiden überbelastet wird. Darüber hinaus werden Kett- und Schußfäden zusammengehalten, so daß ein Verschieben der Fäden zueinander verringert wird. Dies steigert die Dichtigkeit des Gewebematerials.

Die Wandungen im Bereich des Endes sind innerhalb der Rundung oder der Tropfenform gemäß einer anderen Ausgestaltung vollflächig miteinander verwoben. Alternativ kann aber auch eine durch Verweben gebildete Umfangslinie die Tropfenform oder die Rundung definieren, was etwas kostengünstiger ist als das vollflächige Verweben.

Mit der bevorzugten Ausführungsform ist der Gassack ein großflächiger Seitengassack, z.B. ein sogenannter ABC-Gassack, der den Kopf des Insassen vor einem Kontakt mit dem Seitenbereich des Fahrzeugs schützt. Der Gassack besteht aus zwei gegenüberliegenden Wandungen. Wenigstens ein Überströmkanal verbindet die einzelnen Kammern strömungsmäßig miteinander und sorgt für einen Druckausgleich. Dieser Überströmkanal verläuft vorzugsweise längs des unteren Randes des entfalteten, montierten Gassacks. Dies hat den Vorteil, daß sich einzelne Kammern zuerst entfalten können, um den Entfaltungsvorgang zu beschleunigen, und erst im zweiten Schritt ein Druckausgleich stattfindet. Die Überströmkanäle haben darüber hinaus die Aufgabe, als Überlastventil zu wirken, d.h. wenn der Fahrzeuginsasse in eine Kammer eintaucht, kann das Gas aus dieser gedrosselt in andere Kammern strömen. Dadurch wird die Härte des Gassacks beim Aufprall reduziert.

Weitere Merkmale und Vorteile der Erfindung ergeben sich aus der nachfolgenden Beschreibung und aus der nachfolgenden Zeichnung, auf die Bezug genommen wird.

Die einzige Zeichnung zeigt einen vollständig entfalteten Seitengassack nach der Erfindung, der sich von seitlich des Frontinsassen bis seitlich des Heckinsassen erstreckt.

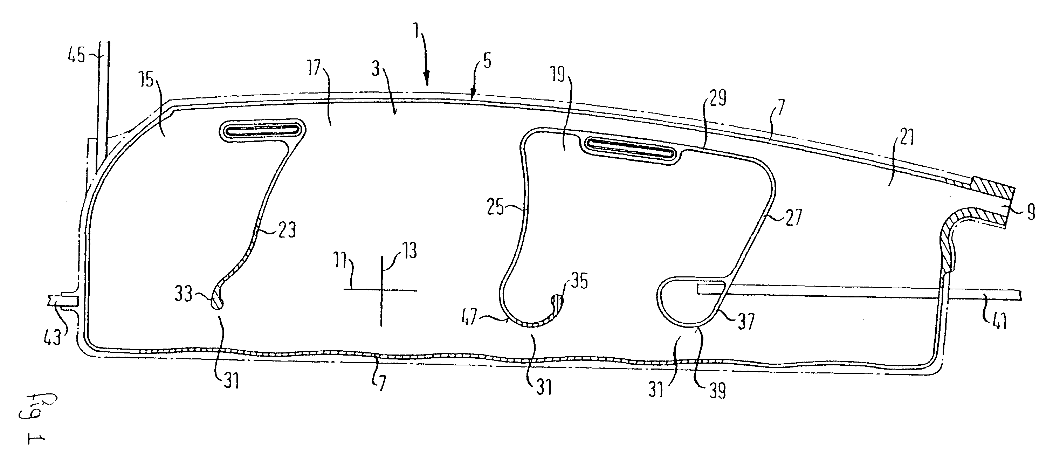

Der in Figur 1 gezeigte Gassack besteht aus zwei gegenüberliegenden Wandungen aus je einer Gewebelage, von denen nur die vorderseitige Wandung 3 zu sehen ist. Die andere Wandung, die hinter der Wandung 3 liegt, ist identisch ausgebildet. Der Gassack 1 ist im Bereich seines oberen Umfangsrandes 5 dem Verlauf des Dachrahmens des Fahrzeugs angepaßt. Die beiden Wandungen sind im Bereich des gesamten Umfangsrandes einstückig miteinander verwoben. Der verwobene Umfangsrand ist mit 7 bezeichnet. Er erstreckt sich um den gesamten Außenumfang herum bis zu einer Einfüllöffnung 9 am fahrzeugheckseitigen Ende des Gassacks. Der verwobene Umfangsrand ist linienförmig, etwa 1 bis 2 cm breit und verläuft längs des unteren, im wesentlichen horizontalen Bereiches wellenförmig. Dadurch werden die Kett- und Schußfäden, die anhand jeweils eines Fadens 11 bzw. 13 exemplarisch dargestellt sind, niedrigeren Belastungen unterworfen als in einem Fall, in dem der verwobene Bereich beispielsweise parallel zu dem Kettfäden 11 verlaufen würde.

Der gezeigte Seitengassack hat mehrere Kammern 15, 17, 19 und 21, die jedoch alle in Strömungsverbindung miteinander stehen. Die Kammern werden durch weitere verwobene, linienförmige Bereiche in Form von sogenannten Trennstegen 23, 25, 27 voneinander getrennt. Die Trennstege 23 und 25 verlaufen gekrümmt und schräg zu den Kett- und den Schußfäden 11 bzw. 13. Der Trennsteg 27 verläuft linear und schräg zu den Kett- und den Schußfäden 11 bzw. 13. Die Trennstege 25 und 27 gehen an ihrem oberen Ende in einem Bereich 29 ineinander über, der parallel zum oberen Rand des Gassacks verläuft. Zwischen dem Bereich 29 und dem oberen Rand kann eine Gaslanze eingesteckt werden.

Die Trennstege erstrecken sich nicht bis zum unteren, im wesentlichen horizontal verlaufenden Umfangsrand des Gassacks, sondern enden mit Abstand von diesem in einem freien Ende. Zwischen diesem freien Ende und dem unteren Umfangsrand 7 ergeben sich dadurch Überströmkanäle 31, die für einen Druckausgleich zwischen den einzelnen Kammern 15 bis 21 sorgen. Die freien Enden der linienförmigen Trennstege 23 bis 27 enden in der Form eines Tropfens 33, 35 oder, was den Trennsteg 27 betrifft, in einer umfangsmäßig geschlossenen Rundung 37. Innerhalb dieser Rundung 37 sind die gegenüberliegenden Wandungen nicht vollflächig miteinander verwoben, wie dies bei den Enden mit Tropfenform 33 und 35 der Fall ist. Vielmehr wird die Rundung 37 durch eine geschlossene, rahmenförmige Umfangslinie 39 definiert. In dem nicht verwobenen, durch die Umfangslinie 39 begrenzten Bereich ist ein Abspannband 41 befestigt, das mit seinem anderen Ende im Bereich der C-Säule arretiert ist. Weitere Abspannbänder sind im Bereich des vorderen Endes des Gassacks an diesem befestigt und mit 43 und 45 bezeichnet.

Die Enden mit der Tropfenform 33, 35 oder mit der Rundung 37 sorgen für eine geringere Belastung des Gewebematerials im Bereich der Enden der Trennstege 23 bis 27. Eine Kombination von Rundung und Tropfenform stellt das Ende des Trennsteges 25 dar. Vor Erreichen der Tropfenform 35 verläuft der Trennsteg 25 nämlich bereits gekrümmt, so daß sich die Form eines U oder einer Teilspirale ergibt, die durch eine Krümmung von weniger als 360°, vorliegend gerade 180° gekennzeichnet ist.

Im Rückhaltefall wird Gas über die nicht gezeigte Gaslanze in den Gassack eingeleitet. Das Gas strömt über die Ausströmöffnungen in die Kammern 15 bis 21 ein und führt zu einem schnellen Entfalten des Gassacks nach unten. Dann, wenn der Gassack annähernd vollständig entfaltet ist und seine annähernd gesamte Fläche zum Schutz bietet, kommt es zum Druckausgleich zwischen den einzelnen Kammern 15 bis 21 über die Überströmkanäle 31. Der Gassack verspannt sich zwischen seinen Spannbändern 41 bis 45 und positioniert sich stabil in dem Fahrzeug seitlich der Köpfe der Front- und Heckinsassen und vor den Seitenscheiben. Der Kopf des Heckinsassen kann im Rückhaltefall etwa im Bereich der Kammer 21 auf den Gassack auftreffen und damit vor einem Aufprall auf die Seitenscheibe geschützt werden. Der Kopf des Frontinsassen wird im Bereich der Kammer 17 bei einem Seitenaufprall vor einem Kontakt mit der Seitenscheibe geschützt. Bei einem Aufprall von schräg vorn können die Kammern 15 und 19 zusätzlichen Schutz bieten.

## Patentansprüche

1. Gassack, mit
mehreren Wandungen (3) aus Gewebematerial, die das Innere des Gassacks begrenzen,
wenigstens einem Trennsteg (23 bis 27), der durch Verweben von gegenüberliegenden Wandungsbereichen gebildet ist und
das Innere des Gassacks in mehrere Kammern (15 bis 21) unterteilt,
**dadurch gekennzeichnet,**
**daß** der Trennsteg (23 bis 27) wenigstens ein freies Ende hat, an dem er sich verbreitert und in einer Tropfenform (33, 35) oder einer Rundung (37) ausläuft.

2. Gassack nach Anspruch 1, **dadurch gekennzeichnet, daß** die Rundung (37) umfangsmäßig geschlossen ist.

3. Gassack nach Anspruch 1 oder 2, **dadurch gekennzeichnet, daß** der Trennsteg (23 bis 27) als langgestreckte Linie verläuft.

4. Gassack nach einem der vorhergehenden Ansprüche, **dadurch gekennzeichnet, daß** das Gewebematerial Kett- und Schußfäden (11 bzw. 13) hat und der Trennsteg (23 bis 27) quer zu den Kett- und den Schußfäden (11, 13) verläuft.

5. Gassack nach einem der vorhergehenden Ansprüche, **dadurch gekennzeichnet, daß** die Wandungen im Bereich des Endes des Trennstegs (23 bis 27), innerhalb der Tropfenform (33, 35) oder der Rundung (37) vollständig miteinander verwoben sind.

6. Gassack nach einem der Ansprüche 1 bis 4, **dadurch gekennzeichnet, daß** die Wandungen innerhalb der Tropfenform (33, 35) oder der Rundung (37) nicht vollflächig miteinander verwoben sind und die Tropfenform (33, 35) oder die Rundung (37) durch eine durch Verweben gebildete Umfangslinie (39) definiert ist.

7. Gassack nach einem der vorhergehenden Ansprüche, **dadurch gekennzeichnet, daß** er als großflächiger Seitengassack ausgebildet ist, der den Kopf des Insassen vor einem Kontakt mit dem Seitenbereich des Fahrzeugs schützt, und daß der Gassack aus zwei gegenüberliegenden Wandungen (3) besteht.

8. Gassack nach Anspruch 7, **dadurch gekennzeichnet, daß** er sich in aufgeblasenem Zustand von seitlich des Front- bis seitlich des Heckinsassen erstreckt.

9. Gassack nach einem der vorhergehenden Ansprüche, **dadurch gekennzeichnet, daß** er wenigstens einen Überströmkanal (31) aufweist, der eine Strömungsverbindung zwischen Kammern (15 bis 21) herstellt, und daß der Trennsteg (23 bis 27) an seinem an den Überströmkanal (31) angrenzenden Ende die Tropfenform (33, 35) oder die Rundung (37) hat.

10. Gassack nach Anspruch 9, **dadurch gekennzeichnet, daß** der Gassack ein großflächiger Seitengassack ist und der Überströmkanal (31) längs des unteren Umfangsrandes, bezogen auf den entfalteten, montierten Zustand, verläuft.

11. Gassack nach einem der vorhergehenden Ansprüche, **dadurch gekennzeichnet, daß** der Trennsteg (23 bis 27) wenigstens vor der Tropfenform (33, 35) oder der Rundung (37) gekrümmt verläuft.

12. Gassack nach Anspruch 11, **dadurch gekennzeichnet, daß** der Trennsteg (25) vor Erreichen seines freien Endes U-förmig oder die Form einer Teilspirale beschreibend verläuft.

## Claims

1. A gas bag, with
several walls (3) of fabric material which delimit the interior of the gas bag,
at least one separating web (23 to 27) which is formed by interweaving opposite wall regions and divides the interior of the gas bag into several chambers (15 to 21),
**characterized in that**
the separating web (23 to 27) has at least one free end at which it widens and runs out in a drop shape (33, 35) or in a rounding (37).

2. The gas bag according to Claim 1, **characterized in that** the rounding (37) is closed peripherally.

3. The gas bag according to Claim 1 or 2, **characterized in that** the separating web (23 to 27) runs as an elongated line.

4. The gas bag according to any of the preceding claims, **characterized in that** the fabric material has warp and weft threads (11 and 13, respectively) and the separating web (23 to 27) runs transversely to the warp and the weft threads (11, 13).

5. The gas bag according to any of the preceding claims, **characterized in that** the walls are fully interwoven with each other in the region of the end of the separating web (23 to 27), within the drop shape (33, 35) or the rounding (37).

6. The gas bag according to any of Claims 1 to 4, **characterized in that** the walls are not interwoven with each other over their entire surface within the drop shape (33, 35) or the rounding (37) and the drop shape (33, 35) or the rounding (37) is defined by a peripheral line (39) formed by interweaving.

7. The gas bag according to any of the preceding claims, **characterized in that** it is constructed as a side gas bag having a large surface area and protecting the head of the occupant from contact with the lateral region of the vehicle, and that the gas bag consists of two opposite walls (3).

8. The gas bag according to Claim 7, **characterized in that** it extends in the inflated state from laterally of the front occupant to laterally of the rear occupant.

9. The gas bag according to any of the preceding claims, **characterized in that** it has at least one overflow channel (31) which produces a flow connection between chambers (15 to 21), and that the separating web (23 to 27) has at its end adjoining the overflow channel (31) the drop shape (33, 35) or the rounding (37).

10. The gas bag according to Claim 9, **characterized in that** the gas bag is a side gas bag having a large surface area and the overflow channel (31), as related to the deployed and fitted state, runs along the lower peripheral rim.

11. The gas bag according to any of the preceding claims, **characterized in that** the separating web (23 to 27) runs in a curved form at least in front of the drop shape (33, 35) or the rounding (37).

12. The gas bag according to Claim 11, **characterized in that** before reaching its free end, the separating web (25) runs in a U-shape or so as to describe the shape of a partial spiral.

## Revendications

1. Coussin à gaz comportant
plusieurs parois (3) en matériau de tissu qui limitent l'intérieur du coussin à gaz,
au moins une traverse de séparation (23, à 27) qui est formée en tissant ensemble des régions de paroi opposées et qui divise l'intérieur du coussin à gaz en plusieurs chambres (15 à 21),
**caractérisé en ce que**
la traverse de séparation (23, à 27) a au moins une extrémité libre au niveau de laquelle elle s'élargit et se termine en forme de goutte (33, 35) ou en arrondi (37).

2. Coussin à gaz selon la revendication 1, **caractérisé en ce que** l'arrondi (37) est fermé sur sa périphérie.

3. Coussin à gaz selon la revendication 1 ou 2, **caractérisé en ce que** la traverse de séparation (23 à 27) s'étend sous forme de ligne allongée.

4. Coussin à gaz selon l'une des revendications précédentes, **caractérisé en ce que** le matériau de tissu a des fils de chaîne et de trame (11 ; 13) et **en ce que** la traverse de séparation (23 à 27) s'étend transversalement aux fils de chaîne et de trame (11, 13).

5. Coussin à gaz selon l'une des revendications précédentes, **caractérisé en ce que** dans la région de l'extrémité de la traverse de séparation (23 à 27), les parois sont totalement tissées l'une à l'autre à l'intérieur de la forme de goutte (33, 35) ou de l'arrondi (37).

6. Coussin à gaz selon l'une des revendications 1 à 4, **caractérisé en ce que** les parois à l'intérieur de la forme de goutte (33, 35) ou de l'arrondi (37) ne sont pas totalement tissées l'une à l'autre, et la forme de goutte (33, 35) ou l'arrondi (37) est défini par une ligne périphérique (39) formée par tissage.

7. Coussin à gaz selon l'une des revendications précédentes, **caractérisé en ce qu'**il est réalisé sous forme de coussin à gaz latéral de grande surface, qui protège la tête de l'occupant d'un contact avec la région latérale du véhicule, et **en ce que** le coussin à gaz est constitué par deux parois (3) opposées.

8. Coussin à gaz selon la revendication 7, **caractérisé en ce qu'**à l'état gonflé, il s'étend depuis le côté de l'occupant de l'avant jusqu'au côté de l'occupant de l'arrière.

9. Coussin à gaz selon l'une des revendications précédentes, **caractérisé en ce qu'**il présente au moins un canal de trop-plein (31) qui établit une liaison d'écoulement entre des chambres (15 à 21), et **en ce que** la traverse de séparation (23 à 27) a la forme de goutte (33, 35) ou l'arrondi (37) à son extrémité adjacente au canal de trop-plein (31).

10. Coussin à gaz selon la revendication 9, **caractérisé en ce que** le coussin à gaz est un coussin à gaz latéral de grande surface et **en ce que** le canal de trop-plein (31) s'étend le long du bord périphérique inférieur par rapport à l'état monté déployé.

11. Coussin à gaz selon l'une des revendications précédentes, **caractérisé en ce que** la traverse de séparation (23 à 27) s'étend en forme arquée au moins devant la forme de goutte (33, 35) ou l'arrondi (37).

12. Coussin à gaz selon la revendication 11, **caractérisé en ce que** la traverse de séparation (25) s'étend en forme de U ou en décrivant la forme d'une spirale partielle avant d'atteindre son extrémité libre.
